(19) Europäisches Patentamt
European Patent Office
Office européen des brevets

(11) Veröffentlichungsnummer: **0 023 265**
**B1**

(12) **EUROPÄISCHE PATENTSCHRIFT**

(45) Veröffentlichungstag der Patentschrift: **06.07.83**

(21) Anmeldenummer: **80103521.3**

(22) Anmeldetag: **24.06.80**

(51) Int. Cl.³: **C 09 C 3/12**, C 09 C 1/24, G 11 B 5/70, H 01 F 1/11, H 01 F 1/06

(54) **Feinteilige Festkörper, ihre Herstellung und Verwendung.**

(30) Priorität: **06.07.79 DE 2927379**

(43) Veröffentlichungstag der Anmeldung: **04.02.81 Patentblatt 81/5**

(45) Bekanntmachung des Hinweises auf die Patenterteilung: **06.07.83 Patentblatt 83/27**

(84) Benannte Vertragsstaaten: **BE DE FR GB IT NL**

(56) Entgegenhaltungen:
**DE-A-2 024 443**
**FR-A-2 243 220**
**FR-A-2 326 454**
**US-A-3 826 773**
**US-A-3 948 676**

(73) Patentinhaber: **BAYER AG, Zentralbereich Patente, Marken und Lizenzen, D-5090 Leverkusen 1, Bayerwerk (DE)**

(72) Erfinder: **Buxbaum, Gunter, Dr., Holzapfelweg 2, D-4150 Krefeld-Traar (DE)**
Erfinder: **Schlak, Ottfried, Dr., Carl-Duisberg-Strasse 331, D-5090 Leverkusen-1 (DE)**
Erfinder: **Hund, Franz, Dr., Scheiblerstrasse 89, D-4150 Krefeld-Bockum (DE)**
Erfinder: **Leitner, Lutz, Dr., Buschstrasse 151, D-4150 Krefeld-Bockum (DE)**
Erfinder: **Holtschmidt, Norbert, Dr., Günsterröderstrasse 10, D-3436 Hessisch-Lichtenau (DE)**

**EP 0 023 265 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Feinteilige Festkörper, ihre Herstellung und Verwendung

Die Erfindung betrifft die Herstellung und Verwendung feinteiliger Festkörper mit einer Umhüllung aus polymeren siliciumorganischen Verbindungen.

Feinteilige Festkörper werden bevorzugt eingesetzt als Farbpigmente und Magnetpigmente und dazu in eine Polymermatrix eingebaut. Dabei werden ihre Eigenschaften wesentlich beeinflußt durch ihre Dispergierbarkeit, Benetzbarkeit und Volumenerfüllbarkeit in den Bindemitteln. Das System aus Bindemitteln und Festkörpern kann Belastungen ausgesetzt werden, wie z. B. Reaktionen der Festkörper mit dem Bindemittel, Temperaturdifferenzen, Strahlungseinflüssen und mechanischen Belastungen. Durch gezielte Oberflächenbehandlungen der feinteiligen Festkörper können diese Belastungen herabgesetzt bzw. vermieden werden, außerdem kann dadurch die Einarbeitung der feinteiligen Festkörper in die Bindemittelsysteme und durch die Lebensdauer des gesamten Systems positiv beeinflußt werden. Bei Farbpigmenten ist auch die Farbstärke von der Dispergierbarkeit abhängig.

Besonders hohe qualitative Forderungen werden in diesem Zusammenhang an magnetische Pigmente gestellt. Magnetische Eisenoxide zur Signalspeicherung werden üblicherweise durch ein Reduktionsverfahren bei Temperaturen von ca. 300 bis 500°C aus nadelförmigen Vorläuferverbindungen herstellt. Durch diese Temperaturbehandlung wird die Pigmentoberfläche stark verändert, und Sinterungen finden statt. Dadurch wird die Benetzbarkeit der Pigmente für Bindemittel, sowohl für wasserverdünnbare als auch für wasserunverträgliche, erheblich verschlechtert.

Um für moderne hochaussteuerbare Cassettenbänder jedoch gute elektroakustische Eigenschaften zu erzielen, sind gutes Dispergierverhalten und hohe Volumenfüllung zwei wesentliche Voraussetzungen.

Es ist schon früher vorgeschlagen worden, magnetische Eisenoxide zu hydrophobieren. Dazu kann man z. B. Alkyltrichlorsilane (DE-A-1 767 973) verwenden oder Silicium-Verbindungen des Typs $R_nSi(OR')_{4-n}$ mit R = Alkylrest mit $C_1-C_{18}$ und R' = kurzkettiger Alkylrest und n = 1—3. (DE-A-2 543 962). Während bei ersterem Verfahren eine Behandlung aus wäßriger Lösung nur ungenügend verläuft, benötigt man für das zweite Verfahren teilweise erhebliche Mengen Si-organischer Substanz: 0,5—40 Gew.-% bezogen auf das Pigment, wobei 2,5 bis 40 Gew.-% bevorzugt werden.

Mengen von mehr als ca. 1—2% Siliconharz oder -öl beeinflussen in der Regel das Bindemittel und damit z. B. das Dispergier-, Abrieb- und Gleitverhalten und die Lackstabilität negativ. Sollen Pigmente in unterschiedlichen Bindemitteln z. B. auch in wasserverdünnbaren oder wasserlöslichen Lacksystemen Verwendung finden, müssen daher Siliconharz- oder Ölkonzentrationen von mehr als 2% vermieden werden. Hydrophobierte Pigmente sind für die letztgenannte Anwendung unbrauchbar.

Aus der US-A-38 26 773 sind schließlich Polysiloxanharze mit einem Rest OR bekannt, wobei R ein monomolekularer bzw. kurzkettiger Alkylrest mit 1 bis 8 Kohlenstoff-Atomen ist. In diese Polysiloxanharze werden silikatische Füllstoffe eingearbeitet. Diese Polysiloxanharze verleihen feinteiligen Festkörpern aber keine gute Dispergierbarkeit in wasserverdünnbaren oder wasserlöslichen Lacksystemen.

Es wurde nun überraschenderweise gefunden, daß die Eigenschaften feinteiliger Festkörper positiv beeinflußt werden können, wenn man diese mit einer Umhüllung von polymeren siliciumorganischen Verbindungen des Typs

$$R^I_a R^{II}_b R^{III}_c Si(OR^{IV})_d(OR^V)_e(OH)_f O_{\frac{4-(a+b+c+d+e+f)}{2}}$$

versieht, worin bedeuten:

| | |
|---|---|
| $R^I$, $R^{II}$, $R^{III}$ | gegebenenfalls verzweigte cyclische, ungesättigte und/oder halogenierte einwertige aliphatische oder aromatische KW-Reste mit 1-10 C-Atomen |
| $R^{IV}$ | ein gegebenenfalls verzweigter einwertiger aliphatischer KW-Rest mit 9—24 C-Atomen |
| $R^V$ | ein gegebenenfalls verzweigter einwertiger aliphatischer KW-Rest mit 1—8 C-Atomen. |

Die Summe a + b + c liegt zwischen 1,0 und 1,95, d kann Werte zwischen 0,2 und 2; e und f können jeweils Werte von 0 bis 1 annehmen.

Die Summe d + e + f liegt zwischen 0,2 und 2,0. Die Bedingung a + b + c + d + e + f kleiner oder gleich 3 muß erfüllt sein.

Bevorzugt sind Verbindungen in denen $R^I$ gleich Methyl, $R^{II}$ gleich Phenyl, die Summe a + b zwischen 1,0 und 1,75, C = 0, $R^{IV}$ ein einwertiger aliphatischer Rest mit 9—24 C-Atomen, d = 0,5 bis 1,5, $R^V$ ein einwertiger aliphatischer Rest mit 1—2 C-Atomen, e = 0 bis 0,8 und f = 0 ist.

Weiterhin soll a zwischen 1,0 und 1,95, b und c gleich Null, d zwischen 0,2 und 0,9, e zwischen 0,1 und 0,8 sowie f gleich Null sein.

Durch den hohen Gewichts-Anteil an Kohlenwasserstoffresten wird der negative Einfluß der Si-organischen Komponente auf die Lackstabilität unterdrückt, so daß noch bei ca. 2 Gew.-% bezogen

auf die feinteiligen Festkörper, keine nachteiligen Effekte beobachtet werden.

Als besonders geeignet für die Umhüllung erweisen sich feinteilige Festkörper mit einer spezifischen Oberfläche von mindestens 1 $m^2$ pro Gramm, vorzugsweise mindestens 5 $m^2$ pro Gramm. Feinteilige Festkörper, die bei ihrer Herstellung einem Glühprozeß ausgesetzt worden sind, sind im allgemeinen hydrophob, so daß ihre Verarbeitung in einem wäßrigen oder überwiegend wäßrigen Medium nicht möglich ist. Nach einer Behandlung mit der genannten siliciumorganischen Verbindung ist eine Anwendung dieser feinteiligen Festkörper sowohl im wäßrigen als auch im unpolaren Medium möglich.

In einer bevorzugten Ausführungsform der Erfindung wird ein nadelförmiges magnetisches Eisenoxid, wie es für hoch aussteuerbare Compakt-Cassetten verwendet werden kann, in einer Konzentration von 50-500 g/l in Wasser angeschlämmt, vorzugsweise in 60—95° C heißem Wasser, und unter intensivem Rühren mit der Lösung einer siliciumorganischen Verbindung des Typs

$$R^{I}_{a} R^{II}_{b} R^{III}_{c} Si(OR^{IV})_{d}(OR^{V})_{e}(OH)_{f}O_{\frac{4-(a+b+c+d+e+f)}{2}}$$

behandelt. Als Lösungsmittel werden vorzugsweise wassermischbare wie z. B. Dioxan, Butanon-2 oder Aceton eingesetzt.

Ein Beispiel für eine siliciumorganische Verbindung des obengenannten allgemeinen Typs stellt die Verbindung

$$Me_{0.67}Ph_{1.0}Si(OC_{18}H_{37})_{0.71}(OMe)_{0.04}O_{0.79}$$

dar, die hergestellt werden kann in einer Reaktion aus einem entsprechende Anteile $Me_2SiO$, $PH_2SiO$ und $PhSiO_{3/2}$ enthaltenden Siliconharz mit einer bestimmten Menge Stearylalkohol und katalytischen Mengen Tetrabutyltitanat.

Wesentlich für die Qualität der Produkte ist die Reaktion von Siliconbestandteil und höherem Alkohol zum Siliconharz.

Wichtig ist dabei, daß der höhere Alkohol eine Kettenlänge von mindestens 9 Kohlenstoffatomen besitzt. Höhere Alkohole mit 9 bis 24 Kohlenstoffatomen erwiesen sich als geeignet, besonders vorteilhaft erwies sich dabei Stearylalkohol.

Wichtig ist weiterhin, daß der höhere Alkohol über SiOC-Verknüpfung mit dem Siliconbestandteil verbunden ist. Die Anwendung der nicht chemisch verbundenen Komponenten ergaben weder für sich allein noch als Gemisch befriedigende Ergebnisse. Vorteilhaft ist die teilweise Anwesenheit von SiOR-Gruppen mit kleinen RO-Gruppen wie Methoxy und Ethoxy.

Nach der Behandlung wird das Pigment filtriert, bei 40—150° C, vorzugsweise bei 60—80° C, getrocknet und in einem üblichen Verdichtungsgerät, z. B. Kugelmühle oder Walzenverdichter, verdichtet.

Das erhaltene Pigment läßt sich sowohl gut von organischen Lösungsmitteln als auch von Wasser benetzen.

Einen besonderen Anwendungsbereich stellt die Umhüllung von Magnetpigmenten dar, bei denen eine wesentliche Verbesserung der Dispergierbarkeit und Packbarkeit der Magnetpigmente im Lack erreicht wird, ohne daß eine Hydrophobierung bewirkt wird.

Es wurde gefunden, daß die erfindungsgemäß nachbehandelten Pigmente sich bei der üblicherweise durchgeführten mechanischen Verdichtung in Kugelmühlen oder Walzenverdichtern wesentlich schonender auf höhere Stampfdichten verdichten lassen. Dies ist insbesondere bei kobaltdotierten magnetischen Eisenoxiden von Vorteil, da weniger Kobalt zur Einstellung einer hohen Koerzitivfeldstärke zugesetzt werden muß.

Zur Ermittlung der Eigenschaften der magnetischen Oxide wird ein Magnetband in der üblichen bekannten Weise hergestellt, indem in Anlehnung an die britische Patentschrift 1 080 614 durch $1^1/_2$-stündige Mahlung in einer Perlmühle von 22,4 Gew.-Tl. des magnetischen Pigments mit 8 Gew.-Tl. PVC/PVA-Mischpolymerisat, 1,3 Gew.-Tl. Öl-Säure, 0,88 Gew.-Tl. komplexen organischen Phosphorsäureestern und 67 Gew.-Tl. Butyl-/Ethylacetat (1:) ein magnetischer Lack hergestellt, auf einer ca. 23 μm dicken Polyesterfolie vergossen, im Magnetfeld ausgerichtet, getrocknet und zwischen Walzen unter Druck und erhöhter Temperatur kalandert wird. Die magnetische Schicht hat eine Stärke von ca. 12 μm und enthält ca. 15 g/$m^2$ Magnetpigment.

Die statischen magnetischen Messungen erfolgen in einem Meßfeld von ca. 4000 Oe.

Die dynamischen Messungen, Höhenaussteuerbarkeit bei 10 KHz ($A_{10}$) und Vollaussteuerbarkeit bei 333 Hz (Av), erfolgen nach den bekannten DIN-Vorschriften (DIN 45 513), Teil 6, (1976) und DIN 45 512, Blatt 2.

Der Volumenfüllfaktor (VF) gibt den Volumen-Anteil des magnetischen Pigmentes am getrocknetem noch nicht kalandertem Lack wieder.

Die erfindungsgemäß eingesetzten Siliconharze werden nach folgenden Darstellungsverfahren erhalten. In diesen sind die angegebenen Teile bzw. Prozente, falls nicht anders angegeben, Gewichtsteile bzw. Gewichtsprozente. Ph kennzeichnet einen Phenyl und Me einen Methylrest.

Herstellung eines Siliconharzes A

Zu 51,18 Teilen eines Siliconharzes aus 33,3 Mol-% $Me_2SiO$, 33,3 Mol-% $Ph_2SiO$ und 33,3 Mol-% $PhSiO_{3/2}$, mit einem Methoxy-Gehalt von 15,4 Gew.-%, werden 65,04 Teile Stearylalkohol und 0,001 Teil Tetrabutyltitanat als Katalysator gegeben. Danach wird während 2 Stunden unter gutem Rühren auf 160°C erwärmt und anschließend 1 Stunde bei 160°C und 100 00 Pa ausgeheizt. Dabei werden zusammen 7,7 Teile Methanol (die äquimolare Menge zum eingesetzten Stearylalkohol) entfernt. Das Produkt wird nach dem Abkühlen auf Raumtemperatur fest. Die Erweichungstemperatur beträgt ca. 50°C. Der Anteil an Stearyloxy-Einheiten beträgt 59,71 Gew.-%. Die durchschnittliche Formel lautet:

$$Me_{0,67}Ph_{1,0}Si(OC_{18}H_{37})_{0,71}(OMe)_{0,04}O_{0,79}$$

Herstellung eines Siliconharzes B

Zu 48,34 Teilen eines Siliconharzes der durchschnittlichen Formel

$$(CH_3)_3SiO[CH_3(C_2H_5O)SiO]_{30}Si(CH_3)_3$$

mit einem Ethoxy-Gehalt von 41,15 Gew.-% werden 62,26 Teile Stearylalkohol und 0,001 Teil Tetrabutyltitanat als Katalysator gegeben. Danach wird während 2 Stunden unter gutem Rühren auf 180°C erwärmt und anschließend 1 Stunde bei 150°C und 5000 Pa ausgeheizt. Dabei werden zusammen 10,60 Teile Ethanol (die äquimolare Menge zum eingesetzten Stearylalkohol) entfernt. Das Produkt wird nach dem Abkühlen auf Raumtemperatur fest. Die Erweichungstemperatur beträgt ca. 40°C. Der Anteil an Stearyloxy-Einheiten beträgt 62,03%. Die durchschnittliche Formel ist:

$$(CH_3)_3SiO[CH_3(C_2H_5O)SiO]_{14,35}[CH_3(C_{18}H_{37}O)SiO]_{15,65}Si(CH_3)_3$$

bzw.

$$Me_{1,13}Si(C_2H_5O)_{0,45}(OC_{18}H_{37})_{0,49}O_{0,96}$$

Folgend werden Nachbehandlungen beispielhaft beschrieben. Es können selbstverständlich auch andere dem Fachmann geläufige Methoden zur Aufbringung von Substanzen auf Pigmentoberflächen, wie z. B. in turbulenter Strömung oder im kontinuierlichen Rührkessel, angewendet werden. Die Erfindung ist selbstverständlich nicht auf das hier beispielhaft beschriebene magnetische Oxid beschränkt, sondern kann vorteilhaft auf alle durch einen Konvertierungsprozeß bei höheren Temperaturen hergestellte Magnetpigmente wie $Fe_3O_4$, $Fe_3O_4$-$\gamma$-$Fe_2O_3$-Mischphasen, $\gamma$-$Fe_2O_3$ oder fremdionenhaltige wie etwa Kobalt-dotierte Pigmente der gleichen Art angewendet werden.

Die erfindungsgemäße Nachbehandlung kann vorteilhaft auch bei pyrophoren Eisen- oder Legierungspigmenten eingesetzt werden. Diese Pigmente werden dabei zusätzlich phlegmatisiert. Ebenso können Ferritpigmente wie z. B. $BaFe_6O_{19}$ vorteilhaft behandelt werden. Die Verbesserung der Dispergierung durch die Behandlung mit den neuartigen Siliconharzen wird nicht nur bei magnetischen Eisenoxidpigmenten beobachtet, sondern tritt bei allen einem Glühprozeß bei der Herstellung unterworfenen Pigmenten auf. Beispielhaft sollen die Oxidpigmente, wie Eisenoxid, Titandioxid, Nickeltitangelb, Chromoxid, Kobaltblau sowie sulfidische, selenidische, Silikatpigmente und andere, dem Fachmann bekannte, im Handbook of Pigments genannte Pigmente, erwähnt werden.

Vergleichsbeispiele I, II, III

Ein mit 0,35 Gew.-% Zink und 0,3 Gew.-% $P_2O_5$ bei der Herstellung des Ausgangsmaterials dotiertes hochausrichtbares $\gamma$-$Fe_2O_3$, wie es nach der deutschen Patentschrift 2 347 486 erhalten werden kann mit einer Koerzitivkraft am Pulver von 338 Oe und den in der Tabelle (Vergleichsbeispiel I) angeführten Eigenschaften am Magnetband, wird auf eine Stampfdichte nach DIN 53 194 von 0,94 g/cm³ verdichtet. Die Eigenschaften sind unter Vergleichsbeispiel II aufgeführt. Das Pulver aus Beispiel I wurde in 80°C heißem Wasser angeschlämmt (50 g/l) und 1/2 h gerührt, abfiltriert und getrocknet. Es wurde unter denselben Bedingungen wie Beispiel II verdichtet. Es stellte sich eine Stampfdichte von 0,86 g/cm³ ein. Die Eigenschaften dieses Pulvers sind unter Vergleichsbeispiel III aufgeführt.

Beispiel 1.1

500 g des magnetischen Oxids nach Vergleichsbeispiel A werden in 10 l warmem Wasser (80°C) angeschlämmt und in 10 min eine Lösung des Siliconharzes A von 2,5 g in 25 ml Dioxan zugefügt.

Anschließend wurde abfiltriert, mit 2 l Wasser nachgewaschen und bei 60°C getrocknet. Unter denselben Bedingungen wie in den Vergleichsbeispielen wurde eine Verdichtung angeschlossen. Es ergab sich eine Stampfdichte von 0,98 g/cm³.

Wie oben beschrieben, wurde ein Magnetband hergestellt. Die Eigenschaften sind in der Tabelle zusammengestellt.

Beispiel 1.2

Es wurde wie in Beispiel 1.1 verfahren, jedoch mit 5,0 g Substanz A in 50 ml Dioxan.

Beispiel 2.1

Es wird wie in Beispiel 1.1 verfahren, jedoch mit 2,5 g Siliconharz B in 25 ml Dioxan.

**Tabelle 1**

| | $\rho_{st}$ | $I^H_{P.}C$ | $I^HC_{Bd.}$ | VF | $A_{10}$ | $A_v$ |
|---|---|---|---|---|---|---|
| | g/cm² | Oe | Oe | % | dB | dB |
| Vergleichsbeispiel I | 0,76 | 338 | 318 | 29 | ±0 | −1 |
| Vergleichsbeispiel II | 0,94 | 316 | 307 | 32,5 | −0,5 | +0,5 |
| Vergleichsbeispiel III | 0,86 | 319 | 314 | 33,5 | −1 | +0,5 |
| Beispiel 1.1 | 0,98 | 308 | 304 | 35,3 | +1 | +1 |
| Beispiel 1.2 | 0,91 | 318 | 301 | 34,6 | +1 | +1 |
| Beispiel 2.1 | 0,89 | 340 | 341 | 34 | +1,5 | +1 |

Beispiel 3

Ein durch Glühung hergestelltes Eisenoxid-Rot-Pigment, das zur besseren Dispergierung mikronisiert wurde und handelsüblich ist (Typ 180 M der Firma BAYER AG), wurde wie im Beispiel 1.1 beschrieben mit 0,5 Gew.-% des Mittels A behandelt. Im Dispergiertest erreicht die unbehandelte Probe nach 4 Stunden Dispergierzeit 61% der möglichen Endfarbstärke, während das erfindungsgemäß behandelte Pigmentpulver nach 4 Stunden bereits eine Farbstärke von 74% aufweist.

Die Dispergierbarkeit der erfindungsgemäß nachbehandelten Pigmente ist leicht in Anlehnung an DIN 53 238, Entwurf März 1974, zu bestimmen. Abweichend wird zur Lackanreibung ein Zahnscheibenrührer (Dissolver) mit 1500 Upm verwendet. Das wesentlich verbesserte Dispergierverhalten von Beispiel 1.1 gegenüber Vergleichsbeispiel I ist in der Abbildung 1 wiedergegeben.

Beispielhaft wurde die Verwendung der erfindungsgemäßen magnetischen Pigmente in magnetischen Aufzeichnungsträgern beschrieben. Die Pigmente sind vorteilhaft auch in magnetischen Tinten und magnetischen Druckfarben einsetzbar.

**Patentansprüche**

1. Feinteilige Festkörper mit einer Umhüllung aus Polymeren siliciumorganischen Verbindungen des Typs

$$R^{I}_{a}\,R^{II}_{b}\,R^{III}_{c}\,Si(OR^{IV})_{d}(OR^{V})_{e}(OH)_{f}O_{\frac{4-(a+b+c+d+e+f)}{2}}$$

wobei

| | |
|---|---|
| $R^I$, $R^{II}$, $R^{III}$ | gegebenenfalls verzweigte, cyclische, ungesättigte und/oder halogenierte einwertige aliphatische oder aromatische Kohlenwasserstoff-Rest mit 1 bis 10 C-Atomen, |
| $R^{IV}$ | ein gegebenenfalls verzweigter einwertiger aliphatischer Kohlenwasserstoffrest mit 9 bis 24 C-Atomen, |
| $R^V$ | ein, gegebenenfalls verzweigter, einwertiger aliphatischer Kohlenwasserstoffrest mit 1 bis 8 C-Atomen bedeuten und |
| a+b+c | zwischen 1,0 und 1,95, |
| d | zwischen 0,2 und 2,0, |
| e und f | zwischen 0 und 1, |
| d+e+f | zwischen 0,2 und 2,0, |
| a+b+c+d+e+f | kleiner oder gleich 3,0 |

ist.

2. Feinteilige Festkörper nach Anspruch 1 mit einer Umhüllung des Typs

$$R^I_a R^{II}_b Si(OR^{IV})_d(OR^V)_e O_{\frac{4-(a+b+d+e)}{2}}$$

wobei

| | |
|---|---|
| $R^I$ | Methyl, |
| $R^{II}$ | Phenyl, |
| $R^{IV}$ | einwertiger aliphatischer Rest mit 9 bis 24 C-Atomen, |
| $R^V$ | einwertiger aliphatischer Rest mit 1 oder 2 C-Atomen, bedeuten und |
| a+b | 1,0 bis 1,95, |
| d | 0,5 bis 1,5, |
| e | 0,01 bis 1,5, |
| d+e | 0,5 bis 2 |

ist.

3. Feinteilige Festkörper nach Anspruch 1 oder 2, mit einer Umhüllung des Typs

$$R^I_a Si(OR^{IV})_d(OR^V)_e O_{\frac{4-(a+d+e)}{2}}$$

wobei

| | |
|---|---|
| $R^I$ | Methyl, |
| $R^{IV}$ | einwertiger aliphatischer Rest mit 9 bis 24 C-Atomen, |
| $R^V$ | aliphatischer Rest mit 1 oder 2 C-Atomen bedeuten, |
| a | 1 bis 1,95, |
| d | 0,2 bis 0,9, |
| e | 0,1 bis 0,8, |
| d+e | 0,3 bis 1,7 |

ist.

4. Festkörper nach einem der Ansprüche 1 bis 3, wobei die polymeren siliciumorganischen Verbindungen in Mengen von 0,1 bis 2 Gew.-%, vorzugsweise von 0,1 bis 1 Gew.-%, eingesetzt werden, die feinteiligen Festkörper eine spezifische Oberfläche von mindestens 1 $m^2/g$, aufweisen.

5. Feinteilige Festkörper nach einem der Ansprüche 1 bis 4, die bei der Herstellung einem Glühprozeß unterzogen wurden.

6. Feinteilige Festkörper nach einem der Ansprüche 1 bis 5, bestehend aus gegebenenfalls durch Fremdionen modifiziertem $\gamma$-$Fe_2O_3$, $Fe_3O_4$ oder Mischphasen von $Fe_2O_3$ und $Fe_3O_4$ oder aus ferromagnetischen Metallen oder Legierungen.

7. Verfahren zur Herstellung der feinteiligen Festkörper nach einem der Ansprüche 1 bis 6, dadurch gekennzeichnet, daß eine wäßrige oder überwiegend wäßrige Aufschlämmung des Pigmentes mit einer polymeren siliciumorganischen Verbindung oder einer Lösung dieser Verbindung des Typs

$$R^I_a R^{II}_b R^{III}_c Si(Or^{IV})_d(OR^V)_e(OH)_f O_{\frac{4-(a+b+c+d+e+f)}{2}}$$

wobei

| | |
|---|---|
| $R^I$, $R^{II}$, $R^{III}$ | gegebenenfalls verzweigte, ungesättigte und/oder halogenierte einwertige aliphatische oder aromatische Kohlenwasserstoff-Reste mit 1 bis 10 C-Atomen, |
| $R^{IV}$ | ein gegebenenfalls verzweigter einwertiger aliphatischer Kohlenwasserstoffrest mit 9 bis 24 C-Atomen, |
| $R^V$ | ein, gegebenenfalls verzweigter, einwertiger aliphatischer Kohlenwasserstoffrest mit 1 bis 8 C-Atomen bedeuten und |
| $a+b+c$ | zwischen 1,0 und 1,95, |
| d | zwischen 0,2 und 2,0, |
| e und f | zwischen 0 und 1, |
| $d+e+f$ | zwischen 0,5 und 2,0, |
| $a+b+c+d+e+f$ | kleiner oder gleich 3,0 ist, |

behandelt wird.

8. Verwendung der feinteiligen Festkörper nach einem der Ansprüche 1—6 zur Herstellung von Beschichtungen, Einfärbungen und Anstrichstoffen.

9. Verwendung der feinteiligen Festkörper nach einem der Ansprüche 1 bis 6 zur Herstellung von magnetischen Aufzeichnungsträgern, Druckfarben oder magnetischen Tinten.

## Claims

1. Finely divided solids having a coating of polymeric organosilicon compounds of the type:

$$R^I_a R^{II}_b R^{III}_c Si(OR^{IV})_d(OR^V)_e(OH)_f O_{\frac{4-(a+b+c+d+e+f)}{2}}$$

wherein

| | |
|---|---|
| $R^I$, $R^{II}$ and $R^{III}$ | denote optionally branched, cyclic, unsaturated and/or halogenated monovalent aliphatic or aromatic hydrocarbon radicals with 1 to 10 C atoms, |
| $R^{IV}$ | denotes an optionally branched monovalent aliphatic hydrocarbon radical with 9 to 24 C atoms, |
| $R^V$ | denotes an optionally branched, monovalent aliphatic hydrocarbon radical with 1 to 8 C atoms, and |
| $a+b+c$ | is between 1.0 and 1.95, |
| d | is between 0.2 and 2.0, |
| e and f | are each between 0 and 1, |
| $d+e+f$ | is between 0.2 and 2.0, and |
| $a+b+c+d+e+f$ | is less than or equal to 3.0. |

2. Finely divided solids according to Claim 1 having a coating of the type

$$R^I_a R^{II}_b Si(OR^{IV})_d(OR^V)_e O_{\frac{4-(a+b+d+e)}{2}}$$

wherein

| | |
|---|---|
| $R^I$ | denotes methyl, |
| $R^{II}$ | denotes phenyl, |
| $R^{IV}$ | denotes a monovalent aliphatic radical with 9 to 24 C atoms, |
| $R^V$ | denotes a monovalent aliphatic radical with 1 or 2 C atoms and |
| $a+b$ | is 1.0 to 1.95, |
| d | is 0.5 to 1.5, |
| e | is 0.01 to 1.5, and |
| $d+e$ | is 0.5 to 2. |

3. Finely divided solids according to Claim 1 or 2, having a coating of the type

$$R^I_a Si(OR^{IV})_d(OR^V)_e O_{\frac{4-(a+d+e)}{2}}$$

wherein

| | |
|---|---|
| $R^I$ | denotes methyl, |
| $R^{IV}$ | denotes a monovalent aliphatic radical with 9 to 24 C atoms, |
| $R^V$ | denotes an aliphatic radical with 1 or 2 C atoms |
| a | is 1 to 1.95, |
| d | is 0.2 to 0.9, |
| e | is 0.1 to 0.8, and |
| d+e | is 0.3 to 1.7. |

4. Solids according to one of Claims 1 to 3, wherein the polymeric organosilicon compounds are used in amounts of 0.1 to 2% by weight, preferably of 0.1 to 1% by weight and the finely divided solids have a specific surface area of at least 1 $m^2/g$.

5. Finely divided solids according to one of Claims 1 to 4, which have been subjected to an annealing process in the course of the preparation thereof.

6. Finely divided solids according to one of Claims 1 to 5, consisting of $\gamma$-$Fe_2O_3$ or $Fe_3O_4$, optionally modified with foreign ions, or mixed phases of $Fe_2O_3$ and $Fe_3O_4$, or of ferromagnetic metals or alloys.

7. Process for the preparation of the finely divided solids according to one of Claims 1 to 6, characterised in that an aqueous or predominantly aqueous slurry of the pigment is treated with a polymeric organosilicon compound or a solution of this compound of the type

$$R^I_a R^{II}_b R^{III}_c Si(Or^{IV})_d(OR^V)_e(OH)_f O_{\frac{4-(a+b+c+d+e+f)}{2}}$$

wherein

| | |
|---|---|
| $R^I$, $R^{II}$ and $R^{III}$ | denote optionally branched, unsaturated and/or halogenated monovalent aliphatic or aromatic hydrocarbon radicals with 1 to 10 C atoms, |
| $R^{IV}$ | denotes an optionally branched monovalent aliphatic hydrocarbon radical with 9 to 24 C atoms, |
| $R^V$ | denotes an optionally branched, monovalent aliphatic hydrocarbon radical with 1 to 8 C atoms and |
| a+b+c | is between 1.0 and 1.95, |
| d | is between 0.2 and 2.0, |
| e and f | are each between 0 and 1, |
| d+e+f | is between 0.5 and 2.0, and |
| a+b+c+d+e+f | is less than or equal to 3.0. |

8. Use of the finely divided solids according to one of Claims 1—6 for the preparation of coatings, colourings and paints.

9. Use of the finely divided solids according to one of Claims 1 to 6 for the production of magnetic recording supports, printing inks or magnetic inks.

**Revendications**

1. Corps solides finement divisés comportant un enrobage constitué de composés polymères organiques de silicium du type

$$R^I_a R^{II}_b R^{III}_c Si(OR^{IV})_d(OR^V)_e(OH)_f O_{\frac{4-(a+b+c+d+e+f)}{2}}$$

où

| | |
|---|---|
| $R^I$, $R^{II}$, $R^{III}$ | représentent des radicaux d'hydrocarbures aromatiques ou aliphatiques monovalents halogénés et/ou cycliques insaturés et éventuellement ramifiés contenant 1 à 10 atomes de carbone, |
| $R^{IV}$ | représente un radical d'hydrocarbure aliphatique monovalent éventuellement ramifié contenant 9 à 24 atomes de carbone, |
| $R^V$ | représente un radical d'hydrocarbure aliphatique monovalent et éventuellement ramifié contenant 1 à 8 atomes de carbone, et |
| a+b+c | se situe entre 1 et 1,95, |
| d | se situe entre 0,2 et 2, |
| e et f | se situent entre 0 et 1, |
| d+e+f | se situe entre 0,2 et 2, |
| a+b+c+d+e+f | $\leq 3$. |

2. Corps solides finement divisés suivant la revendication 1 comportant un enrobage du type

$$R^{I}_{a}\,R^{II}_{b}\,Si(OR^{IV})_{d}(OR^{V})_{e}O_{\frac{4-(a+b+d+e)}{2}}$$

où

$R^{I}$ représente un groupe méthyle,
$R^{II}$ représente un groupe phényle,
$R^{IV}$ représente un radical aliphatique monovalent contenant 9 à 24 atomes de carbone,
$R^{V}$ représente un radical aliphatique monovalent contenant 1 ou 2 atomes de carbone, et
$a+b$ se situe entre 1 et 1,95,
$d$ se situe entre 0,5 et 1,5,
$e$ se situe entre 0,01 et 1,5,
$d+e$ se situe entre 0,5 et 2.

3. Corps solides finement divisés suivant la revendication 1 ou 2 comportant un enrobage du type

$$R^{I}_{a}\,Si(OR^{IV})_{d}(OR^{V})_{e}O_{\frac{4-(a+d+e)}{2}}$$

où

$R^{I}$ représente un groupe méthyle,
$R^{IV}$ représente un radical aliphatique monovalent contenant 9 à 24 atomes de carbone,
$R^{V}$ représente un radical aliphatique contenant 1 ou 2 atomes de carbone,
$a$ se situe entre 1 et 1,95
$d$ se situe entre 0,2 et 0,9,
$e$ se situe entre 0,1 et 0,8,
$d+e$ se situe entre 0,3 et 1,7.

4. Corps solides suivant une des revendications 1 à 3, les composés polymères organiques de silicium étant utilisés en quantités de 0,1 à 2% en poids, de préférence, de 0,1 à 1% en poids, tandis que les corps solides finement divisés ont une surface spécifique d'au moins 1 m2/g.

5. Corps solides finement divisés suivant une des revendications 1 à 4, soumis à un processus de calcination lors de leur préparation.

6. Corps solides finement divisés suivant une des revendications 1 à 5, constitués de $\gamma$-$Fe_2O_3$ éventuellement modifié par des ions étrangers, de $Fe_3O_4$ ou de phases mixtes de $Fe_2O_3$ et de $Fe_3O_4$ ou encore d'alliages ou de métaux ferromagnétiques.

7. Procédé de préparation de corps solides finement divisés suivant une des revendications 1 à 6, caractérisé en ce qu'on traite une suspension aqueuse ou principalement aqueuse du pigment avec une composé polymère organique de silicium ou une solution de ce composé du type

$$R^{I}_{a}\,R^{II}_{b}\,R^{III}_{c}\,Si(Or^{IV})_{d}(OR^{V})_{e}(OH)_{f}O_{\frac{4-(a+b+c+d+e+f)}{2}}$$

où

$R^{I}$, $R^{II}$, $R^{III}$ représentent des radicaux d'hydrocarbures aromatiques ou aliphatiques monovalents halogénés et/ou cycliques insaturés et éventuellement ramifiés contenant 1 à 10 atomes de carbone,
$R^{IV}$ représente un radical d'hydrocarbure aliphatique monovalent éventuellement ramifié contenant 9 à 24 atomes de carbone,
$R^{V}$ représente un radical d'hydrocarbure aliphatique monovalent éventuellement ramifié contenant 1 à 8 atomes de carbone, et
$a+b+c$ se situe entre 1 et 1,95,
$d$ se situe entre 0,2 et 2,
$e$ et $f$ se situent entre 0 et 1,
$d+e+f$ se situe entre 0,5 et 2,
$a+b+c+d+e+f$ $\leq 3$.

8. Utilisation des corps solides finement divisés suivant une des revendications 1 à 6 pour la fabrication de revêtements, de peintures et de matières d'enduction.

9. Utilisation des corps solides finement divisés suivant une des revendications 1 à 6 pour la fabrication de supports d'enregistrement magnétiques, de couleurs d'impression ou d'encres magnétiques.

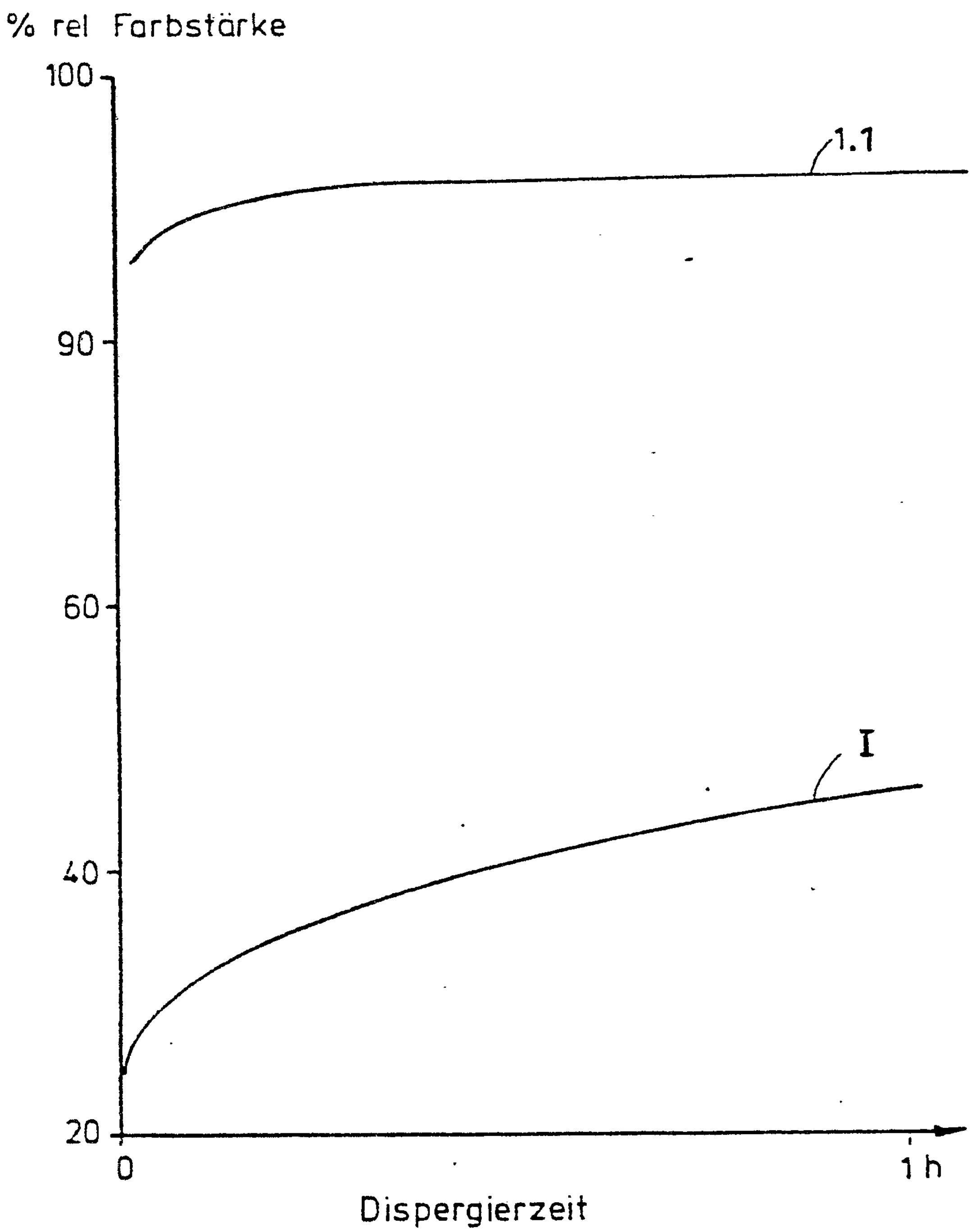


FIG. 1